# EUROPEAN PATENT SPECIFICATION

(11) **EP 3 357 679 B1**
(45) Date of publication and mention of the grant of the patent: **01.01.2020**
(21) Application number: 16863976.3
(22) Date of filing: 20.10.2016
(51) Int. Cl.: B31F 1/24, B31F 1/28, B31F 1/36, B05C 1/08

(54) **HUMIDIFYING DEVICE AND CORRUGATING MACHINE**
BEFEUCHTUNGSVORRICHTUNG UND WELLPAPPEMASCHINE
DISPOSITIF D'HUMIDIFICATION ET MACHINE DE PRODUCTION DE CARTON ONDULÉ

(30) Priority: 10.11.2015 JP 2015220422
(43) Date of publication of application: 08.08.2018
(73) Proprietor: Mitsubishi Heavy Industries Machinery Systems, Ltd., Hyogo-ku, Kobe-shi Hyogo 652-8585 (JP)
(72) Inventor: HARADA, Naoyuki, Mihara-shi Hiroshima 729-0393 (JP); MIZUTANI, Hideki, Mihara-shi Hiroshima 729-0393 (JP)
(74) Representative: Hoffmann Eitle
(86) International application number: PCT/JP2016/081128
(87) International publication number: WO 2017/082012

(56) References cited:
- DE-A1- 1 561 494
- DE-B- 1 240 727
- JP-A- H0 834 081
- JP-A- H11 221 870
- JP-A- H11 501 263
- JP-A- 2001 129 905
- JP-A- 2008 055 777
- JP-A- 2008 055 777

## Description

### Technical Field

The present invention relates to a humidifying device humidifying liner paper after heating by a preheater and before affixing to medium paper and a corrugating machine using the humidifying device.

### Background Art

In general, a production line of a cardboard manufacturing apparatus referred to as a corrugating machine is provided with a mill roll stand equipped with rollers for base paper of bottom liner paper, base paper of top liner paper, and base paper of medium base paper that are raw materials of cardboard paper, a splicer as a paper splicing device for continuously supplying cardboard base paper toward the corrugating machine, a single facer forming the medium paper delivered from the mill roll stand into a wave shape and manufacturing single-faced cardboard paper by affixing to the top liner paper via a glue applied to the apex of the wave shape, and a double facer manufacturing double-faced cardboard paper by affixing to the bottom liner paper via a glue applied to the remaining apex of the wave shape of the single-faced cardboard paper manufactured by the single facer.

In the corrugating machine of this type, the liner paper is heated with a preheater prior to affixing of the liner paper with respect to the medium paper in the single facer and the double facer. This is to perform preheating to a predetermined liner paper temperature so that the liner paper is affixed in a satisfactory manner during liner paper affixing work. In general, the heating is performed by the liner paper coming into contact with a peripheral face (heating surface) of the roll-shaped preheater and being transported. The heating amount that is given to the liner paper increases as the time of the contact between the liner paper and the roll-shaped preheater increases, that is, the wrapping angle (wrap angle) of the liner paper with respect to the preheater increases. In this regard, the heating amount of the liner paper is set by wrap angle adjustment. The wrap angle is set by the contact area of the liner paper with respect to the preheater being adjusted by a roller provided in parallel to the preheater on the upstream side and the downstream side of the preheater being moved in a circumferential direction at regular intervals with respect to the peripheral face of the preheater.

In the related art, the wrap angle is increased to complement an increase in the heat capacity of the liner paper and preheating to a predetermined liner paper temperature at which the liner paper is affixed in a satisfactory manner is performed by an increase in the heating amount even in a case where weight liner paper that has a large weight per unit area is affixed.

Although the moisture of the liner paper allowing easy glue penetration is 3 to 6 wt% in general, an increase in heating heat amount by the preheater as described above results in a decrease in the moisture of the liner paper (surface layer in particular) at the same time. The decrease in moisture causes a problem by decreasing the penetration depth as the depth of the glue penetration of the liner paper per unit time. In order to avoid the problem, the liner paper transport speed should be dropped so that penetration time is earned from an increase in wetting time. This, however, leads to a decline in cardboard production efficiency.

In Japanese Unexamined Patent Application Publication No. 2008-055777 (refer to Fig. 1), which represents the closest prior art a corrugating machine is disclosed in which a water application roller is provided downstream of a preheater so that affixing to medium paper in a downstream double facer is performed in a satisfactory manner by liner paper being allowed to contain appropriate moisture after heating by the preheater. In addition, disclosed in Japanese Unexamined Patent Application Publication No. 11-221870 (refer to Fig. 8) is a corrugating machine provided with a water application roller device for liner paper humidification between a heating portion and a cooling portion of a double facer. Japanese Unexamined Patent Application Publication No. 11-221870 is to prevent warping relating to the width direction of liner paper by appropriately humidifying the liner paper transported to the cooling portion with a water application roller.

### Citation List

### Patent Literature

Further, relevant prior art can be found in DE 15 61 494 A1.

### Summary of Invention

### Technical Problem

The water application roller according to Japanese Unexamined Patent Application Publication No. 2008-055777 above is immersed in water stored in a pan so that a water film is formed on an outer peripheral face and this water film is applied to the surface of the liner paper coming into contact therewith. The temperature of the liner paper is reduced by the water applied to the liner paper, and thus the pan is supplied with water heated to a predetermined temperature (heated water). This is to avoid a low water temperature, which results in a decline in the temperature of the liner paper, the liner paper temperature that is required for the following affixing work step not being held, and an affixing failure in some cases.

However, in Japanese Unexamined Patent Application Publication No. 2008-055777, the pan storing the heated water for humidification is open in the entire upper portion (hereinafter, referred to as an open portion), and thus a large gap is formed between the pan and the water application roller. As a result, the heat of the heated water is dissipated from the open portion and it is difficult to hold the heated water at a predetermined high temperature (such as 90°C).

Japanese Unexamined Patent Application Publication No. 11-221870 is to prevent warping relating to the width direction of the liner paper. Accordingly, although a liner paper humidifying device is disclosed, there is room for improvement regarding temperature management for water for liner paper humidification.

The present invention has been made in view of the above circumstances, and an object thereof is to provide a humidifying device and a corrugating machine with which heat release from heated water can be suppressed as much as possible and liner paper humidification can be performed at an appropriate temperature.

### Solution to Problem

This object is solved by a humidifying device with the features of claim 1 and a corrugating machine with the features of claim 16. Preferred embodiments follow from the other claims.

In order to achieve the above object, the present invention provides
1) a humidifying device humidifying liner paper transported in one direction and affixed to medium paper via a glue applied to an apex of a wave shape of the medium paper formed into the wave shape, the device being suitable for being provided downstream of a preheater of a corrugating machine and including
   a liquid application roller the liner paper prior to the affixing and applying a heated liquid to the liner paper, and
   a chamber disposed to face a peripheral face of the liquid application roller and provided with an internal space to which the liquid is supplied,
   in which the chamber has an opening communicating with the internal space, the opening being for supplying the liquid to the peripheral face of the liquid application roller, and a length of the opening in a direction orthogonal to an axial direction of the liquid application roller is less than a diameter of the liquid application roller.
   According to the present invention, the heated liquid for humidification is held in the internal space of the chamber that is highly sealable, the liquid comes into contact with the liquid application roller via the opening of the chamber, and the width-direction length of the opening in the direction orthogonal to the axis of the liquid application roller is less than the diameter of the liquid application roller, and thus the liquid application roller is capable of substantially functioning as a lid of the opening.
2) Desirably, the chamber is provided vertically below an axial center of the liquid application roller. This is to cause droplets attached to the chamber to be naturally dropped by their own weights and expelled with ease.
3) Desirably, an outside surface of an opening member forming the opening and extending in the axial direction is inclined obliquely downward from a horizontal plane in the chamber. This is to cause droplets attached to the surface to be naturally dropped by their own weights and expelled.
4) Desirably, the humidifying device further includes a blade provided between the internal space and a contact point of the liquid application roller and the liner paper and scraping off the liquid attached to a surface of the liquid application roller and control means for adjusting an amount of the liquid applied to the liner paper by controlling an operation of at least one of the liquid application roller and the blade. This is to allow the amount of the liquid attached to the peripheral face of the liquid application roller, eventually the amount of the liquid given to the liner paper, to be adjusted.
5) Desirably, a plurality of the blades are juxtaposed in the axial direction and a blade moving mechanism is provided for each of the blades to be driven in a direction of approaching or separating from the surface of the liquid application roller. This is to allow the distribution of the liquid attachment amount relating to the axial direction of the roller peripheral face of the liquid application roller.
6) Desirably, the blade is provided on a downstream side of the chamber in a rotation direction of the liquid application roller. This is because the amount of the liquid attached to the peripheral face of the liquid application roller can be adjusted before the liquid is given to the liner paper.
7) Desirably, the opening member forming the opening of the chamber constitutes the blade. This is because the opening member of the chamber can be given a blade function.
8) Desirably, the humidifying device further includes a gap adjustment mechanism adjusting a gap between the opening of the chamber and the peripheral face of the liquid application roller. This is because the gap can be easily adjusted.
9) Desirably, the humidifying device further includes a motor rotating the liquid application roller and the control means controls a rotation speed of the motor. This is because the amount of the liquid applied to the liner paper can be easily controlled by the rotation speed of the motor being controlled.
10) Desirably, a liquid passage supplying the liquid into the chamber is provided and heating means for the liquid is interposed on the liquid passage. This is because a decline in the temperature of the liquid attributable to heat dissipation can be offset.
11) Desirably, the heating means is provided in the chamber. This is because the liquid can be heated immediately before the application to the liner paper, and thus a decline in temperature attributable to heat dissipation can be suppressed.
12) Desirably, the liquid passage is provided with a temperature sensor measuring a temperature of the liquid and an output of the heating means is controlled based on a detection result of the temperature sensor. This is to facilitate holding of the liquid at a predetermined temperature.
13) Desirably, a pan receiving the liquid is provided below the chamber. This is because the liquid overflowing from the chamber and the liquid scraped off by the blade can be recovered.
14) Desirably, the liquid passage is a circulation passage provided with a supply passage supplying the liquid into the chamber and a recycle passage returning the liquid stored in the pan to the supply passage. This is because the heated water can be reused and water temperature raising efficiency can be enhanced. In other words, the liquid stored in the pan is heated at least once and thus has a certain temperature, and the temperature of the liquid can be raised up to a predetermined temperature with a small heating amount.
15) Desirably, the glue is a starch glue and the temperature of the liquid is at least 90°C. This is because the temperature of the liner paper preheated by the preheater can be held.
16) Another invention provides
   a corrugating machine in which the humidifying device according to any one of 1) to 15) above is provided downstream of a preheater heating sheet-like liner paper transported in one direction and affixed to medium paper via a glue applied to an apex of a wave shape of the medium paper formed into the wave shape prior to the affixing.

According to the present invention, the humidifying device is provided downstream of the preheater as described above, and thus the temperature of the liner paper heated by the preheater is held at an optimum affixing temperature and the optimum moisture amount of the liner paper can be obtained. As a result, the affixing can be realized under the optimum condition. The heated liquid of the humidifying device is held in the chamber, and thus temperature management can be facilitated and the liner paper can be maintained at an appropriate temperature with ease.

### Advantageous Effects of Invention

In the humidifying device according to the present invention, the heated liquid for humidification is held in the internal space of the chamber that is highly sealable, the liquid is supplied to the liquid application roller via the opening of the chamber, and the length of the opening in the direction orthogonal to the axial direction of the liquid application roller is less than the diameter of the liquid application roller, and thus the liquid application roller is capable of substantially functioning as a lid of the opening. As a result, the heat dissipation from the liquid held in the chamber can be suppressed as much as possible and the humidification of the liner paper can be performed at an appropriate temperature by the liquid.

As a result, even in the case of weight liner paper with a large heat capacity, the temperature of the liner paper is capable of reaching a temperature suitable for affixing without a decline in transport speed, and thus a satisfactory affixing strength can be obtained.

In the corrugating machine according to the present invention, the humidifying device is provided downstream of the preheater as described above, and thus the temperature of the liner paper heated by the preheater is held at an optimum affixing temperature and the optimum moisture amount of the liner paper can be obtained. As a result, affixing can be realized under the optimum condition. The heated liquid of the humidifying device is held in the chamber, and thus temperature holding can be facilitated and the liner paper can be maintained at an appropriate temperature with ease.

### Brief Description of Drawings

Fig. 1 is a schematic side view illustrating a double facer of a corrugating machine according to an embodiment of the present invention and its neighboring part in an extracted manner.
Fig. 2 is a schematic diagram illustrating a configuration of a humidifying device according to the embodiment of the present invention.
Fig. 3 is a schematic plan view for showing the size relationship between a liquid application roller (water application roller) and an opening of a chamber.
Fig. 4 is a schematic diagram in a case where the relative position of the chamber with respect to the liquid application roller is adjusted by a gap adjustment mechanism.
Fig. 5 is a schematic side view for showing the range in which a water scraping blade can be installed that is defined from the positional relationship between the liquid application roller and the chamber.
Figs. 6A and 6B are schematic diagrams illustrating a chamber blade along with the liquid application roller, Fig. 6A is a cross-sectional view, and Fig. 6B is a front view as seen from the direction perpendicular thereto.
Figs. 7A and 7B are schematic diagrams illustrating a doctor blade along with the liquid application roller, Fig. 7A is a cross-sectional view, and Fig. 7B is a side view as seen from the direction perpendicular thereto.
Fig. 8 is a schematic diagram illustrating the positional relationship of the liquid application roller and the chamber for showing the limit of the position where the chamber is provided with respect to the liquid application roller.

### Description of Embodiments

Hereinafter, embodiments of the present invention will be described with reference to accompanying drawings.

Each of the following embodiments is merely an example, and various modifications and technical applications not specified in the following embodiments shall not be excluded. Each configuration of each of the following embodiments can be implemented in various modified forms within the scope of the present invention, can be selected as necessary, or can be appropriately combined.

### [1. Configuration of Double Facer and Its Peripheral]

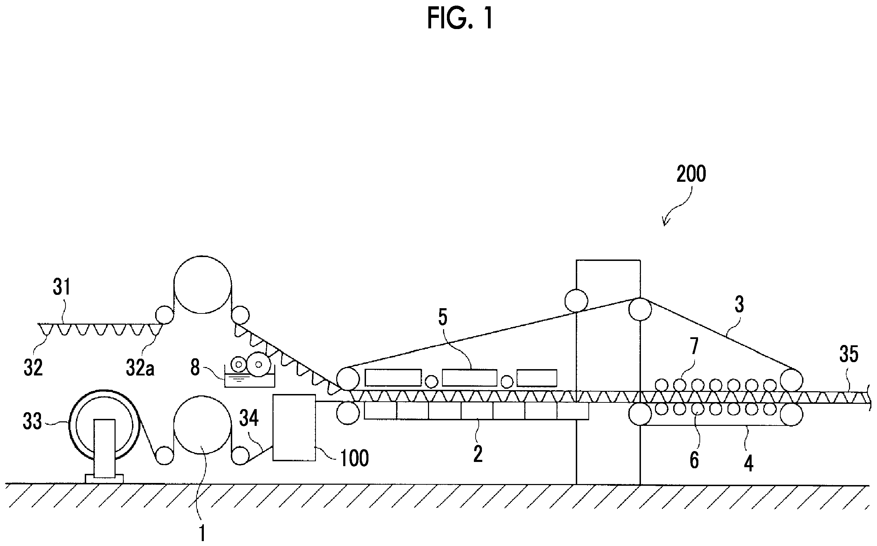

Fig. 1 is a schematic side view illustrating a double facer of a corrugating machine according to the present embodiment and its neighboring part in an extracted manner. As illustrated in Fig. 1, a double facer 200 manufactures double-faced cardboard 35 by affixing bottom liner paper 34 to single-faced cardboard 31 manufactured with a single facer (not illustrated). Accordingly, the bottom liner paper 34 is affixed to an apex 32a of a wave shape of medium paper 32 of the single-faced cardboard 31 via a starch glue (hereinafter, also referred to as a glue) while the single-faced cardboard 31 supplied from the single facer is transported in one direction (from the left side to the right side in Fig. 1).

In the corrugating machine according to the present embodiment, the bottom liner paper 34 is heated with a preheater 1 and heated water is applied to the heated bottom liner paper 34 by a humidifying device (structure of which will be described later) 100 before affixing of the single-faced cardboard 31 and the bottom liner paper 34.

The bottom liner paper 34 is delivered from a base paper roller 33 with which a mill roll stand is equipped and is preliminarily heated by the preheater 1. The preliminarily heated bottom liner paper 34 is introduced into the double facer 200 after being humidified by the humidifying device 100.

The double facer 200 is provided with a hot plate group 2 forming the traveling paths of the single-faced cardboard 31 and the bottom liner paper 34, and the single-faced cardboard 31 and the bottom liner paper 34 travel on the hot plate group 2 in a superimposed manner. Heated steam is supplied to a hollow portion of the hot plate group 2, and the upper surface of each hot plate is heated to, for example, 180°C. An upper conveyor 3 and a lower conveyor 4 sandwiching and transporting the double-faced cardboard 35 formed by affixing of the single-faced cardboard 31 and the bottom liner paper 34 are provided above the hot plate group 2 and on the downstream side of the hot plate group 2. In addition, a pressurizing device 5 pressurizing the back surface of the upper conveyor 3 with an air pressurizing device, a weight roller, or the like and pressurizing the single-faced cardboard 31 and the bottom liner paper 34 from above is disposed above the hot plate group 2. Also provided are a lower roller group 6 supporting the lower conveyor 4 from a back surface and an upper weight roller group 7 disposed on the back surface of the upper conveyor 3 on the downstream side of the pressurizing device 5.

The single-faced cardboard 31 and the bottom liner paper 34 introduced between the pressurizing device 5 and the hot plate group 2 of the double facer 200 are placed in a state of joining via a raw starch solution applied to the apex 32a of the medium paper 32 of the single-faced cardboard 31 by a gluing device 8, sandwiched by the upper conveyor 3 and the lower conveyor 4, and transported. The raw starch solution is turned into a glue (gelated) by heat from the bottom liner paper 34, the temperature of which is raised by heat reception during traveling in contact sliding with respect to the hot plate group 2, the bottom liner paper 34 is affixed to the medium paper 32 based on its adhesive force, and the double-faced cardboard 35 is formed. The formed double-faced cardboard 35 is transported by the upper conveyor 3 and the lower conveyor 4 and transported to the next step.

In this manner, in the double facer 200 of the corrugating machine, the raw starch solution is applied to the apex 32a of the medium paper 32 and the bottom liner paper 34 is affixed to each apex 32a. Essential for the affixing force in this case to be demonstrated in a satisfactory manner is giving a "pressurizing force" with respect to an affixing portion, predetermined or longer "heating time", and humidification for the bottom liner paper 34 to contain appropriate moisture during the affixing. The humidifying device 100 is provided on the downstream side of the preheater 1 and the upstream side of the double facer 200 so that the humidification is performed.

In the present embodiment, the bottom liner paper 34 is heated to a predetermined temperature by the preheater 1. This is to raise the temperature of the starch glue applied to the apex 32a of the medium paper 32 by the gluing device 8 and gelate the starch glue during the affixing of the bottom liner paper 34 and the medium paper 32 of the single-faced cardboard 31 and affix the bottom liner paper 34 and the medium paper 32 of the single-faced cardboard 31 in a satisfactory manner in the double facer 200. The moisture content of the bottom liner paper 34 decreases as a result of the heating by the preheater 1, and thus it is difficult to hold the moisture content of the bottom liner paper 34 at a moisture content optimal for affixing (approximately 3 to 6 wt%). Desirable in this regard is performing appropriate humidification with moisture given to the bottom liner paper 34.

In a case where moisture is given for humidification, however, the temperature of the bottom liner paper 34 falls below the temperature required for the affixing once the temperature of the given moisture is low. In this regard, the water that is used for the humidification is heated so that the temperature of the bottom liner paper 34 during the affixing becomes optimal (details will be described later). Hereinafter, the heated water for humidification will be referred to as heated water.

The heating of the bottom liner paper 34 by the preheater 1 is performed by adjustment of the position of an adjustment roller (not illustrated) provided in parallel to the axis of the roller forming the preheater 1 on the upstream and downstream sides of the preheater 1. In other words, the contact area (wrap angle) of the bottom liner paper 34 with respect to the preheater 1 is adjusted by the adjustment roller being moved in a circumferential direction at regular intervals with respect to a peripheral face of the preheater 1. In this manner, the heating amount supplied from the preheater 1 to the bottom liner paper 34 can be adjusted. The heating amount increases as the wrap angle increases. The wrap angle (heating amount) is adjusted so as to reach a predetermined value based on the heat capacity defined as, for example, the weight of the bottom liner paper 34.

### [2. Configuration of Humidifying Device]

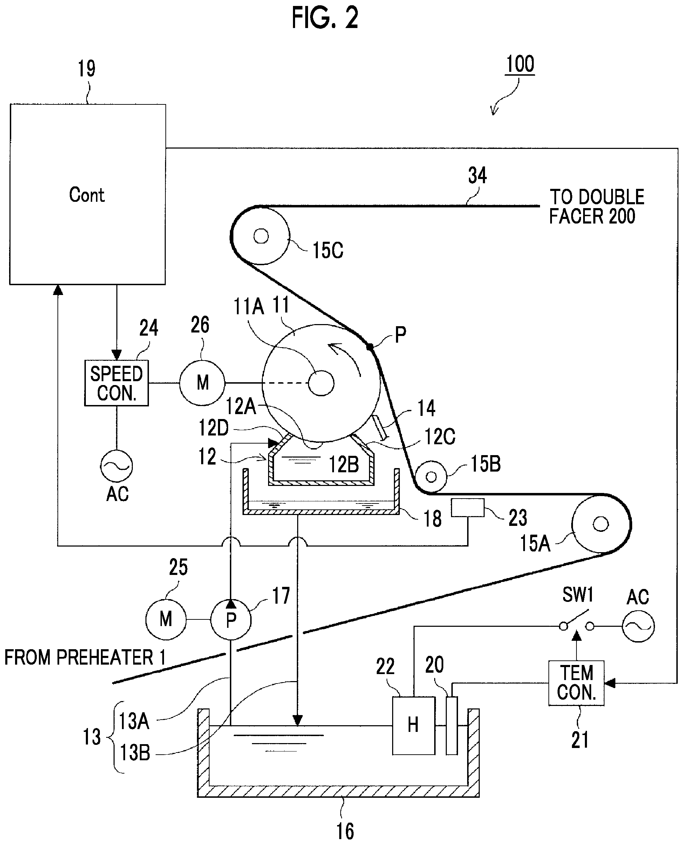

Fig. 2 is a schematic diagram illustrating a configuration of the humidifying device according to the present embodiment and is a diagram illustrating in detail the configuration of the humidifying device 100 that is illustrated in a block in Fig. 1. As illustrated in Fig. 2, the humidifying device 100 has a water application roller (liquid application roller) 11 and a chamber 12. The heated water attached to the peripheral face of the water application roller 11 is applied to the bottom liner paper 34 by the bottom liner paper 34 heated by the preheater 1 abutting against the peripheral face of the water application roller 11. In a vertically downward rotational phase, the peripheral face of the water application roller 11 is in contact with the heated water in the chamber 12 vertically below a rotary shaft 11A via an opening 12A. The peripheral face of the water application roller 11 is, for example, flat and metal-plated (chrome-plated). In addition, a recessed portion may also be formed by sculpture in the peripheral face of the water application roller 11.

In this manner, rotation of the rotary shaft 11A (counterclockwise rotation in Fig. 2) results in heated water-based water film formation on the peripheral face of the water application roller 11 in contact with the heated water in the chamber 12 and the water film (heated water) is applied to the bottom liner paper 34. A blade (doctor blade) 14 is provided between the chamber 12 and a "contact place P of the bottom liner paper 34 and the water application roller 11" position-set on the downstream side of the chamber 12 in the rotation direction of the water application roller 11 (hereinafter, also referred to as a roller rotation direction) . By the remaining heated water attached to the peripheral face of the water application roller 11 being appropriately scraped off by the blade 14, the thickness of the water film formed on the peripheral face of the water application roller 11, eventually the amount of the heated water applied to the bottom liner paper 34, is adjusted. After passing through the preheater 1, the bottom liner paper 34 is guided by guide rollers 15A, 15B, and 15C and is transported toward the double facer 200 in a state where moisture (heated water) is given from the contact with the water application roller 11. The heated water application amount may also be adjusted based on a change in the contact area (wrap angle) of the bottom liner paper 34 to the water application roller 11 resulting from a movement of the guide rollers 15B and 15C.

The chamber 12 has opening members 12C and 12D. The opening members 12C and 12D face each other on the downstream and upstream sides relating to the rotation direction of the water application roller 11, extend in the axial direction of the rotary shaft 11A, and define two inter-facing sides of the downstream and upstream sides of the opening 12A at respective upper ends. The heated water is supplied to an internal space 12B of the chamber 12 communicating via the opening 12A. The heated water is stored in a water tank 16, pumped up from the water tank 16 by a pump 17 driven to rotate by a motor 25, and supplied to the internal space 12B as described above via a supply passage 13A of a liquid passage 13. As a result, the heated water in the internal space 12B of the chamber 12 is pressed against the peripheral face of the water application roller 11 at a predetermined pressure via the opening 12A.

In addition, the heated water overflowing to the outside of the chamber 12 via the gap between the opening 12A of the chamber 12 and the water application roller 11 is stored in a pan 18 provided below the chamber 12. In other words, the liquid passage 13 according to the present embodiment has the heated water supply passage 13A reaching the chamber 12 from the water tank 16 and a heated water recycle passage 13B returning to the water tank 16 from the pan 18 and the liquid passage 13 is formed as a heated water circulation passage by both passages 13A and 13B. The pump 17 according to the present embodiment has a discharge pressure controlled in accordance with the rotation speed of the motor 25. The rotation speed of the motor 25 is controlled by a command from a control device 19. In this manner, the pressure of the heated water in the chamber 12 is adjusted. The adjustment of the pressure of the heated water can also be realized by the supply pressure being controlled with a pressure adjustment valve (not illustrated) at a constant rotation speed of the pump 17.

The water tank 16 is provided with a temperature sensor 20 detecting the temperature of the heated water in the water tank 16 and a heater 22 heating the heated water in the water tank 16. Each of the temperature sensor 20 and the heater 22 is immersed in the heated water in the water tank 16.

The temperature of the heated water in the water tank 16 (that is, the temperature of the heated water supplied to the chamber 12 via the supply passage 13A) is controlled by a temperature controller 21 turning ON and OFF a switch SW1 (turning ON and OFF the energization of the heater 22) interposed between an alternating power supply AC and the heater 22 based on the temperature detected by the temperature sensor 20. In other words, the control signal with respect to the switch SW1 that is output from the temperature controller 21 is generated based on the result of comparison between a temperature command value output from the control device 19 and indicating the setting temperature of the heated water in the water tank 16 and a real-time temperature detection value detected by the temperature sensor 20.

In other words, the switch SW1 is turned ON and the heater 22 is turned ON when the temperature command value is higher than the temperature detection value by a predetermined temperature, the switch SW1 is turned OFF and the heater 22 is turned OFF when the temperature command value is lower than the temperature detection value by a predetermined temperature, and the temperature of the heated water is maintained within a fixed range from the setting temperature as a result.

The temperature of the heated water stored in the water tank 16 is determined based on the temperature of the bottom liner paper 34 between the preheater 1 and the water application roller 11 (after heating by the preheater 1 and before heated water application by the water application roller 11). This is to control the surface temperature of the bottom liner paper 34 such that the affixing is performed at an appropriate temperature in view of the gelation temperature of the starch glue during the affixing to the apex 32a of the medium paper 32 of the single-faced cardboard 31 by the double facer 200 (refer to Fig. 1, same as below) following the heated water application to the bottom liner paper 34 by the water application roller 11.

Accordingly, in the present embodiment, a temperature sensor 23 detecting the temperature of the surface of the bottom liner paper 34 is provided on the downstream side of the preheater 1 and the upstream side of the water application roller 11, that is, between the preheater 1 and the water application roller 11. The temperature sensor 23 sends the control device 19 temperature information indicating the detected surface temperature of the bottom liner paper 34.

The control device 19 determines the temperature command value with respect to the temperature controller 21 such that the temperature of the bottom liner paper 34 reaches an appropriate temperature during the affixing to the single-faced cardboard 31 even after the heated water is applied to the bottom liner paper 34 by the water application roller 11. In the present embodiment, the heated water has a set temperature of at least 90°C so that the temperature of the bottom liner paper 34 preheated by the preheater 1 can be held.

The rotational peripheral speed of the water application roller 11 according to the present embodiment is controlled by an inverter-driven motor 26. Although the amount of the heated water application with respect to the bottom liner paper 34 increases as the rotational peripheral speed of the water application roller 11 increases, when the rotational peripheral speed is excessively high, the water film surface on the peripheral face of the water application roller 11 may become rough and humidification unevenness with respect to the bottom liner paper 34 may arise. In this regard, in the present embodiment, a setting value relating to the rotational peripheral speed is determined such that uniform humidification can be realized for the bottom liner paper 34 without the water film surface on the peripheral face of the water application roller 11 becoming rough and appropriate humidification can be performed on the bottom liner paper 34 with a water film of appropriate thickness formed on the bottom liner paper 34. The setting value is stored in the control device 19 and is output to a speed controller 24 as a rotation command value from the control device 19. The speed controller 24 converts the voltage of the alternating power supply AC to a voltage corresponding to the rotation command value and supplies it to the inverter-driven motor 26. As a result, the motor 26 is driven to rotate at a rotation speed based on the rotation command value output by the control device 19. The setting value of the rotational peripheral speed of the water application roller 11 may be a peripheral speed obtained in advance through an experiment or the like and not causing the water film surface on the peripheral face of the water application roller 11 to become rough.

In the present embodiment, the temperature of the heated water in the chamber 12 is devised to be held at a predetermined temperature by the heat dissipation from the heated water held in the chamber 12 being suppressed as much as possible so that humidification conditions by the temperature of the heated water for humidification and so on do not fluctuate.

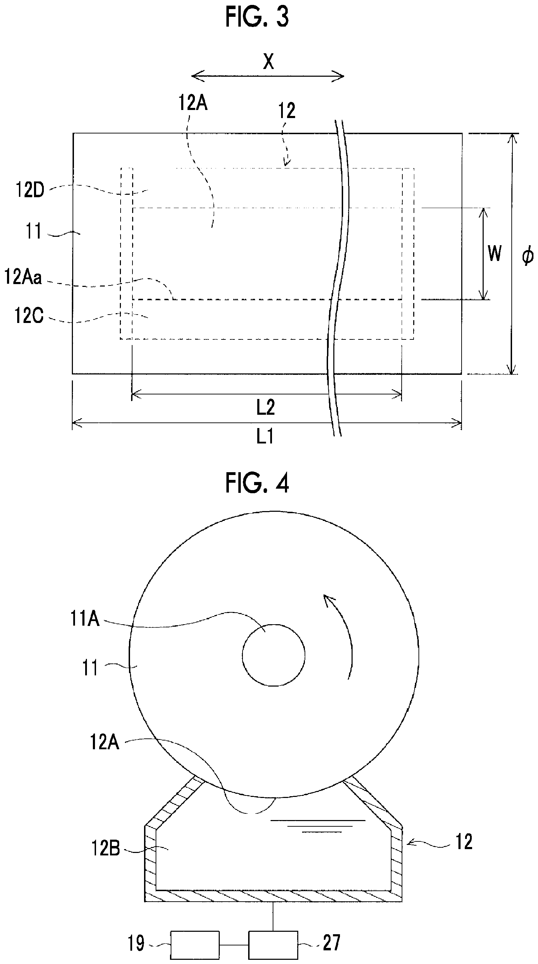

The above-described point will be described with reference to Fig. 3. Fig. 3 is a schematic plan view for showing the size relationship between the water application roller 11 and the opening 12A of the chamber 12.

As illustrated in Fig. 3, a length L2 of the opening 12A relating to the axial direction of the water application roller 11 (hereinafter, referred to as an opening length) is less than a length L1 of the water application roller 11 relating to the axial direction (hereinafter, referred to as a roller length) and, at the same time, a length W of the opening 12A relating to the direction orthogonal to the axial length (hereinafter, referred to as an opening width) is less than a diameter ϕ of the water application roller 11 (hereinafter, referred to as a roller diameter). As a result, the opening 12A of the chamber 12 is covered with the water application roller 11, and thus the heat dissipation of the heated water from the opening 12A can be suppressed. In the present embodiment, the opening width W is less than the roller diameter ϕ (opening width W < roller diameter ϕ) and the opening length L2 is shorter than the roller length L1 (opening length L2 < roller length L1). However, the suppression of the heat dissipation of the heated water is still obtained insofar as at least the opening width W is less than the roller diameter ϕ (opening width W < roller diameter ϕ). As a matter of course, when the opening width W is less than the roller diameter ϕ as in the present embodiment, the heat dissipation suppression effect can be obtained to a larger extent when the opening length L2 is shorter than the roller length L1 at the same time.

Preferably, the opening length L2 is set to a dimension exceeding the full width of the liner paper 34 so that moisture is given to the full width of the liner paper 34.

In the case of considering the heat dissipation from the opening 12A of the chamber 12, considering the gap between the opening 12A and the water application roller 11 is also essential. Although it is desirable that this gap is small from the viewpoint of suppressing the heat dissipation, a slight gap defined by the humidification amount needs to be provided in relation to one side 12Aa of the opening 12A on the most downstream side relating to the roller rotation direction among the four sides defining the opening 12A. The most effective heat retention can be ensured when this gap is ensured and the other three sides defining the opening 12A abut against the peripheral face of the water application roller 11. Essential regarding the gap in relation to the water application roller 11 is causing no roughness on the water film surface of the water application roller 11. The optimum value (setting value) of the gap between the water application roller 11 and the opening 12A may be determined through an experiment or the like.

A seal member may be provided with regard to the three sides other than the side 12Aa formed by the opening member 12C among the four sides defining the opening 12A and the chamber 12 may abut against the water application roller 11 via the seal member. Even better heat retention can be performed in this case.

As illustrated in Fig. 4, a configuration is also possible in which the gap between the water application roller 11 and the opening 12A of the chamber 12 can be adjusted by a gap adjustment mechanism 27 adjusting the relative position of the chamber 12 with respect to the water application roller 11 being provided. A structure is exemplified in which the position of the chamber 12 is adjusted with respect to the water application roller 11 by the chamber 12 being linearly and vertically moved by the gap adjustment mechanism 27. Although the gap adjustment mechanism 27 is optional, the gap between the opening 12A and the water application roller 11 can be adjusted to a desired size by the gap adjustment mechanism 27 being provided, and then the amount of the water attached to the peripheral face of the water application roller 11 and the amount of humidification with respect to the bottom liner paper 34 can be set to any amounts. The operation of the gap adjustment mechanism 27 is controlled by the control device 19.

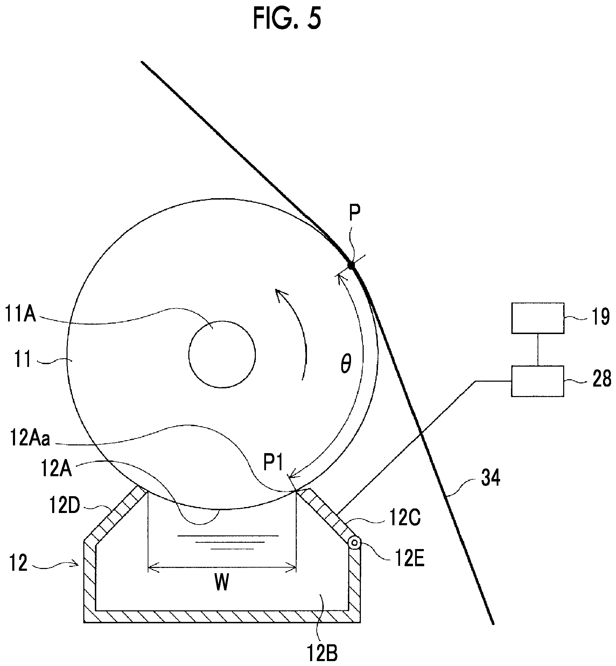

As described above, in the present embodiment, the thickness of the water film on the peripheral face of the water application roller 11, eventually the amount of the heated water applied to the bottom liner paper 34, is adjusted by the heated water attached to the peripheral face of the water application roller 11 being scraped off. In other words, the heated water attached to the peripheral face of the water application roller 11 may be scraped off after the water application roller 11 comes into contact with the heated water in the chamber 12 as a result of rotation and the heated water is attached to the peripheral face and before the heated water is applied to the bottom liner paper 34. Specifically, as illustrated in Fig. 5, the heated water may be scraped off within a range θ between the "internal space 12B of the chamber 12" and the "contact place P of the bottom liner paper 34 and the water application roller 11".

Accordingly, a blade (chamber blade) can also be formed by using the opening member 12C on the rotation direction downstream side of the water application roller 11, which is one of the opening members 12C and 12D extending in an axial direction X of the water application roller 11 and forming the opening 12A of the chamber 12, as illustrated in Fig. 5 instead of the blade (doctor blade) 14 (refer to Fig. 2) as described above (hereinafter, the opening member 12C will also be referred to as a blade 12C). The blade 12C has a lower end position rotatably supported in a hinge portion 12E. By the blade 12C being rotated and its inclination being appropriately changed, the gap between the tip of the blade 12C and the peripheral face of the water application roller 11 can be easily adjusted. As a result, the amount by which the heated water is scraped off from the peripheral face of the water application roller 11 can be appropriately set.

As a matter of course, even in a case where the blade 14 as a doctor blade is used as described above, the gap with the peripheral face of the water application roller 11 can be appropriately adjusted by a hinge portion (not illustrated) being provided in a base end portion of the blade 14 and the amount of its rotation being adjusted. As a result, the amount by which the heated water is scraped off from the peripheral face of the water application roller 11 can be appropriately set.

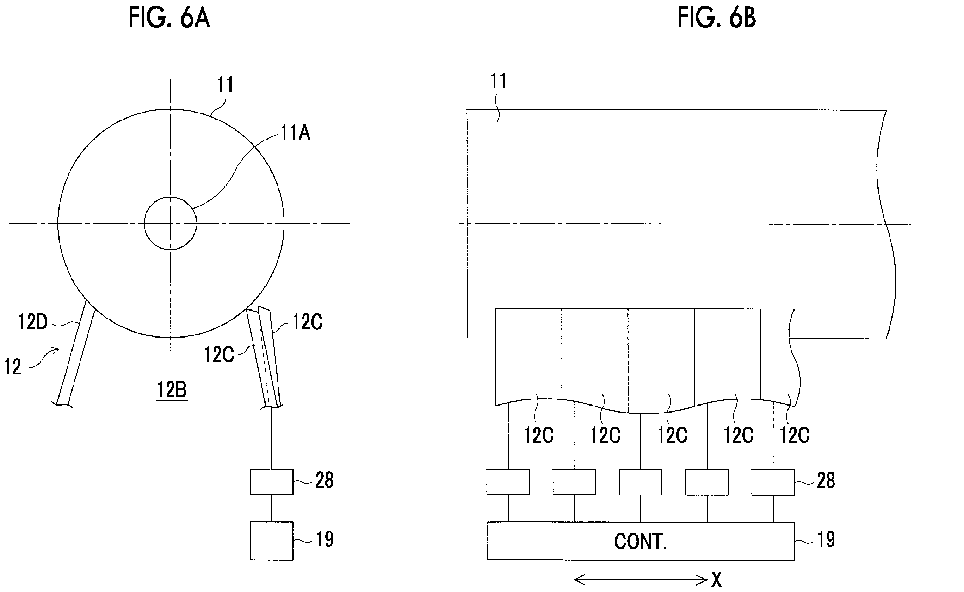

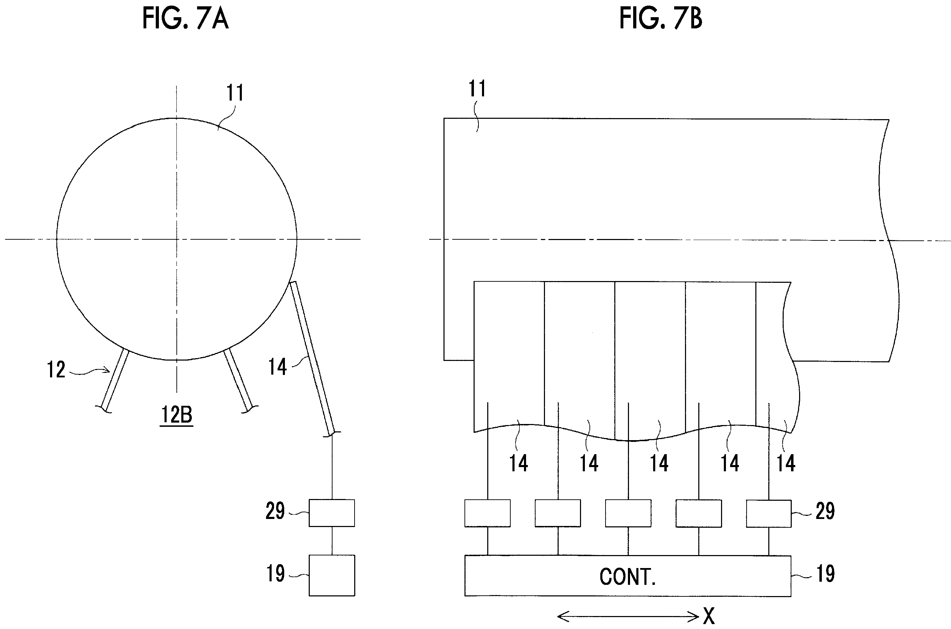

Regarding the blades 12C and 14 as described above, a plurality of those can also be configured to line up in the axial direction X with each being narrow in relation to the axial direction X of the water application roller 11. Examples of the blades 12C and 14 will be described with reference to Figs. 6A, 6B, 7A, and 7B.

Figs. 6A and 6B are schematic diagrams illustrating the blade formed as a chamber blade along with the water application roller. Fig. 6A is a cross-sectional view and Fig. 6B is a front view as seen from the direction perpendicular thereto. In the example illustrated in Figs. 6A and 6B, the rotation amount (inclination) of each blade 12C is individually adjusted by a blade moving mechanism 28. As a result, the gap with the peripheral face of the water application roller 11 is adjusted for each blade 12C through appropriate approaching or separating of the tip of each blade 12C from the peripheral face of the water application roller 11. As a result of the individual adjustment, the distribution of the water scraping amount relating to the axial direction X of the water application roller 11 can be changed. In this manner, water films with different film thicknesses depending on the position relating to the axial direction X can be formed on the peripheral face of the water application roller 11. When the bottom liner paper 34 is humidified by the water films with the different thicknesses, affixing condition optimization can be achieved. In addition, affixing condition optimization can be achieved through a change in the distribution of the humidification amount of the bottom liner paper 34 in the axial direction X and warping of the double-faced cardboard 35 in the axial direction X can be controlled as well.

The blade 12C is a member constituting a part of the chamber 12, and thus is a member having a relatively large predetermined thickness. In other words, even in a case where each blade 12C rotates independently, the blades 12C adjacent in the axial direction X partially overlap each other because of their thicknesses as indicated by the dashed line in Fig. 6A, and thus gap formation between the plurality of blades 12C is prevented and heated water leakage via the gap is prevented.

Figs. 7A and 7B are schematic diagrams illustrating the blade (doctor blade) 14 independently formed separately from the chamber along with the water application roller. Fig. 7A is a cross-sectional view and Fig. 7B is a front view as seen from the direction perpendicular thereto. As illustrated in Figs. 7A and 7B, a plurality of the narrow blades 14 are disposed to line up in relation to the axial direction X. Each blade 14 is individually rotated about a hinge portion (not illustrated) of a base end portion by a blade moving mechanism 29. As a result, the gap between each blade 14 and the peripheral face of the water application roller 11 can be individually adjusted through appropriate approaching or separating of the tip of each blade 14 from the peripheral face of the water application roller 11. In this manner, the gap with the peripheral face of the water application roller 11 is adjusted through individual rotation of each blade 14, and thus affixing condition optimization can be achieved through a change in the distribution of the humidification amount of the bottom liner paper 34 in the axial direction X and warping of the double-faced cardboard 35 in the axial direction X can be controlled as well. Each blade 14 is configured separately from the chamber 12 and provided on the roller rotation direction downstream side of the chamber 12. Accordingly, each blade 14 is provided on the roller rotation direction downstream side in comparison to the blade 12C illustrated in Figs. 6A and 6B.

Each of the blade 12C and the blade 14 is configured such that its inclination is adjusted through a change in its rotation amount about its base end portion as a rotational center, the gap with the water application roller 11 is adjusted as a result, and the amount of the heated water attached to the peripheral face of the water application roller 11 is controlled as a result. However, the present invention is not limited thereto. The same purpose can be met even with a configuration in which the gaps between the tips of the blade 12C and the blade 14 and the peripheral face of the water application roller 11 are adjusted by the blade 12C and the blade 14 being formed to be capable of moving forward and backward in the respective longitudinal directions thereof. The blade moving mechanisms 28 and 29 adjusting the gaps between the water application roller 11 and the blades 12C and 14 are controlled by the control device 19.

### [3. Action and Effect]

In the humidifying device according to the present embodiment as described above, the water application roller 11 is capable of functioning as a lid of the opening 12A. As a result, the sealability of the internal space 12B of the chamber 12 can be enhanced and the heated water heated to a predetermined temperature can be held in the highly sealable internal space 12B. Accordingly, the heat dissipation of the heated water in the chamber 12 can be suppressed as much as possible and a predetermined temperature can be maintained. Therefore, the bottom liner paper 34 can be humidified with the heated water that has a predetermined temperature in view of the gelation temperature of the starch glue. As a result, the temperature of the bottom liner paper 34 is allowed to reach a temperature suitable for glue gelation and the moisture content of the bottom liner paper 34 is allowed to reach a moisture content suitable for glue penetration, and thus affixing of the single-faced cardboard 31 (medium paper 32) and the bottom liner paper 34 can be performed in a satisfactory manner.

In the corrugating machine according to the present embodiment, the humidifying device 100 is provided downstream of the preheater 1 as described above, and thus the temperature and the moisture content of the bottom liner paper 34 heated by the preheater 1 are allowed to reach those suitable for glue-based affixing. As a result, optimum-condition affixing of the bottom liner paper 34 with respect to the medium paper 32 on the downstream side of the humidifying device 100 can be realized.

### [4. Others]

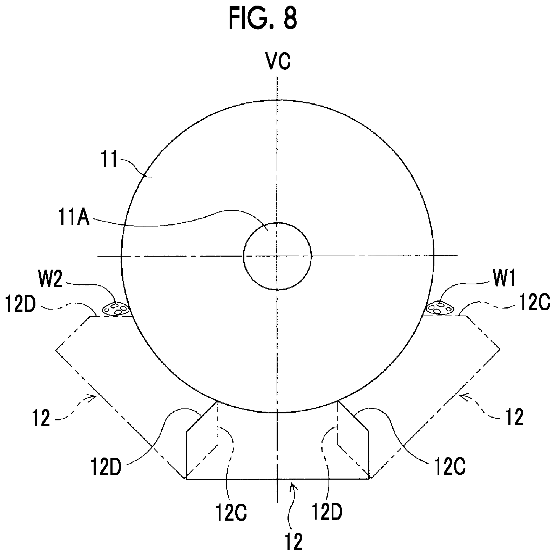

The present invention is not limited to the embodiments described above. Humidifying devices that have the following configurations are also included in the technical scope of the present invention.
1) The chamber 12 according to the embodiment described above is provided vertically below the axial center of the rotary shaft 11A of the water application roller 11. However, the present invention is not limited thereto. The chamber 12 may also be disposed at a position shifted to some extent to the downstream side or the upstream side from the position vertically below the water application roller 11 in relation to the roller rotation direction (counterclockwise direction in this example). The two-dot chain line in Fig. 8 indicates an example of the limit of the range that is allowed as the position of the chamber 12 in this case. When it comes to the chamber 12, the outside surface of the opening member 12C and the outside surface of the opening member 12D need to be surfaces inclined obliquely downward from a horizontal plane (including vertical surfaces) toward the outside of the chamber 12 (that is, as the distance from the water application roller 11 increases) on the downstream side (right side in the drawing) and the upstream side (left side in the drawing) relating to the rotation direction of the water application roller 11 with respect to a center line VC in the vertical direction, respectively. This is to cause water droplets W1 and W2 leaking out from the chamber 12 to be dropped by their own weights and expelled between the water application roller 11 and the upper end portions of the opening members 12C and 12D.
   In contrast, in a case where the outside surfaces of the opening member 12C and the opening member 12D are surfaces (including horizontal surfaces) inclined obliquely upward toward the outside of the chamber 12, the water leaking out from the chamber 12 is gathered as the water droplets W1 and W2 between the water application roller 11 and the tip positions of the opening members 12C and 12D. In this case, the gathered water droplets W1 and W2 may cause the water film formed on the peripheral face of the water application roller 11 to become rough or be scattered to the bottom liner paper 34 (refer to Fig. 2), and then inconvenience arises by, for example, the bottom liner paper 34 being negatively affected.
   Accordingly, the position of the chamber 12 that is indicated by the two-dot chain line in Fig. 8 is the limit position within the allowable range.
   The outside surfaces of the opening member 12C and the opening member 12D are the surfaces of the opening member 12C and the opening member 12D that are directed to the outside of the chamber 12, that is, those on the side opposite to the inside surfaces facing the internal space 12B.
2) In the embodiment described above, the liquid passage 13 supplying water to the chamber 12 is a circulation passage that has the supply passage 13A and the recycle passage 13B which includes the pan 18. In principle, however, the supply passage 13A is optional. Still, the heated water overflowing from the chamber 12 can be reused and useless consumption of the heated water can be prevented when the circulation passage has the configuration of the embodiment described above.
3) The position where the temperature sensor 23 is provided may also be the downstream side of the water application roller 11 insofar as it is the upstream side of the double facer 200. This is because, in the present invention, information on the temperature detected by the temperature sensor 23 is returned to the control device 19 and the control device 19 controls the temperature of the heated water such that the temperature of the bottom liner paper 34 during the affixing in the double facer 200 reaches a predetermined temperature in view of the gelation temperature of the starch glue.
4) The positions where the temperature sensor 20 detecting the temperature of the heated water and the heater 22 heating the heated water are attached are not particularly limited and may also be inside the chamber 12, inside the liquid passage 13, and so on insofar as the temperature of the heated water supplied to the chamber 12 can be detected and the heated water can be heated. Still, the optimum attachment position of the temperature sensor 20 is inside the chamber 12 insofar as it causes no installation space-related problem. This is because the temperature of the heated water immediately before attachment to the bottom liner paper 34 can be directly managed by the temperature sensor 20.
5) A surfactant may be added to the heated water as well. The bottom liner paper 34 can be more easily penetrated by the heated water by the surfactant being added. As a result, the wetting time for sufficient soaking in the heated water can be shortened and a required glue penetration depth can be obtained in a short time.
6) Although not illustrated, in the embodiment described above, top liner paper and medium paper are affixed by a glue during the manufacturing of the single-faced cardboard 31 in the single facer as well. Accordingly, the same humidifying device 100 may also be provided between the single facer and the preheater disposed on the upstream side of the single facer. Then, the affixing of the top liner paper and the medium paper can be performed in a satisfactory manner.
7) In the case of handling of lightweight liner paper, the temperature of the liner paper can be raised up to a temperature at which the raw starch solution is turned into a glue simply by heated water application to the liner paper, and thus the humidifying device 100 according to the embodiment described above is capable of taking the place of the preheater 1. In this case, heating by the preheater 1 can be stopped. In the case of a corrugating machine dedicated to lightweight liner paper, the preheater can be omitted by the humidifying device 100 being used as a preheater.

### Reference Signs List

1 Preheater
11 Water application roller (liquid application roller)
12 Chamber
12A Opening
12B Internal space
12C Opening member
13 Liquid passage
13A Supply passage
13B Recycle passage
14 Blade
16 Water tank
18 Pan
19 Control device
20 Temperature sensor
22 Heater
23 Temperature sensor
27 Gap adjustment mechanism
28, 29 Blade moving mechanism
31 Single-faced cardboard
32 Medium paper
34 Bottom liner paper
100 Humidifying device
200 Double facer
L1 Roller length
L2 Length dimension of opening 12A
W Width dimension of opening 12A
ϕ Roller diameter

## Claims

1. A humidifying device humidifying liner paper (34) transported in one direction and affixed to medium paper (32) via a glue applied to an apex of a wave shape of the medium paper (32) formed into the wave shape, the device being suitable for being provided downstream of a preheater (1) of a corrugating machine and comprising:
a liquid application roller (11) heating the liner paper prior to the affixing and applying a heated liquid to the liner paper (34); and
a chamber (12) disposed to face a peripheral face of the liquid application roller (11) and provided with an internal space (12B) to which the liquid is supplied,
wherein the chamber (12) has an opening (12A) communicating with the internal space (12B) at a vertically upper part thereof, the opening (12A) being for supplying the liquid to the peripheral face of the liquid application roller (11), wherein a portion in a vertically downward direction of the liquid application roller enters the chamber from the opening to contact the liquid in the chamber,
**characterized in that** a length (W) of the opening (12A) in a direction orthogonal to an axial direction of the liquid application roller is less than a diameter of the liquid application roller (11).

2. The humidifying device according to Claim 1, wherein the chamber (12) is provided vertically below an axial center of the liquid application roller (11).

3. The humidifying device according to Claim 1, wherein an outside surface of an opening member (12C) forming the opening (12A) and extending in the axial direction is inclined obliquely downward from a horizontal plane in the chamber (12).

4. The humidifying device according to any one of Claims 1 to 3, further comprising:
a blade (14) provided between the internal space (12B) and a contact point of the liquid application roller (11) and the liner paper and being adapted to scrape off the liquid attached to a surface of the liquid application roller (11); and
control means (19) for adjusting an amount of the liquid applied to the liner paper by controlling an operation of at least one of the liquid application roller (11) and the blade (14).

5. The humidifying device according to Claim 4, wherein a plurality of the blades (14) are juxtaposed in the axial direction and a blade moving mechanism (28, 29) is provided for each of the blades (14) to be driven in a direction of approaching or separating from the surface of the liquid application roller (11).

6. The humidifying device according to Claim 4 or 5, wherein the blade (14) is provided on a downstream side of the chamber (12) in a rotation direction of the liquid application roller (11).

7. The humidifying device according to Claim 4 or 5, wherein the opening member (12C) forming the opening (12A) of the chamber (12) constitutes the blade (14).

8. The humidifying device according to any one of Claims 1 to 7, further comprising:
a gap adjustment mechanism (27) adjusting a gap between the opening (12A) of the chamber (12) and the peripheral face of the liquid application roller (11).

9. The humidifying device according to any one of Claims 1 to 8, further comprising:
a motor rotating the liquid application roller (11),
wherein the control means (19) controls a rotation speed of the motor.

10. The humidifying device according to any one of Claims 1 to 9, wherein a liquid passage (13) supplying the liquid into the chamber (12) is provided and heating means (22) for the liquid is interposed on the liquid passage (13) .

11. The humidifying device according to Claim 10, wherein the heating means (22) is provided in the chamber (12) .

12. The humidifying device according to Claim 10 or 11, wherein the liquid passage (13) is provided with a temperature sensor (23) measuring a temperature of the liquid and an output of the heating means (22) is controlled based on a detection result of the temperature sensor (23).

13. The humidifying device according to any one of Claims 1 to 12, wherein a pan (18) receiving the liquid is provided below the chamber (12).

14. The humidifying device according to Claim 13, wherein the liquid passage (13) is a circulation passage provided with a supply passage (13A) supplying the liquid into the chamber (12) and a recycle passage (13B) returning the liquid stored in the pan (18) to the supply passage (13A).

15. The humidifying device according to any one of Claims 1 to 14, wherein the glue is a starch glue and the temperature of the liquid is at least 90°C.

16. A corrugating machine in which the humidifying device (100) according to any one of Claims 1 to 15 is provided downstream of a preheater (1) heating sheet-like liner paper transported in one direction and affixed to medium paper (32) via a glue applied to an apex of a wave shape of the medium paper (32) formed into the wave shape prior to the affixing.

## Patentansprüche

1. Befeuchtungsvorrichtung, die Deckenpapier (34) befeuchtet, das in einer Richtung transportiert wird und an Zwischenlagenpapier (32) mittels eines Leims befestigt wird, der auf einen Scheitelpunkt einer Wellenform des Zwischenlagenpapiers (32), das in die Wellenform geformt ist, aufgetragen wird, wobei die Vorrichtung geeignet ist, stromabwärts eines Vorheizers (1) einer Wellpappenmaschine bereitgestellt zu sein, und umfassend:
eine Flüssigkeitsauftragswalze (11), die das Deckenpapier erhitzt, bevor es befestigt wird, und eine erhitzte Flüssigkeit auf das Deckenpapier (34) aufträgt; und
eine Kammer (12), die so angeordnet ist, dass sie einer Umfangsfläche der Flüssigkeitsauftragswalze (11) zugewandt ist und mit einem Innenraum (12B) bereitgestellt ist, dem die Flüssigkeit zugeleitet wird,
wobei die Kammer (12) eine Öffnung (12A) aufweist, die mit dem Innenraum (12B) an einem vertikal oberen Teil davon kommuniziert, wobei die Öffnung (12A) zum Zuleiten der Flüssigkeit zur Umfangsfläche der Flüssigkeitsauftragswalze (11) dient, wobei ein Abschnitt in einer vertikal stromabwärts verlaufenden Richtung der Flüssigkeitsauftragswalze von der Öffnung in die Kammer eintritt, um die Flüssigkeit in der Kammer zu kontaktieren,
**dadurch gekennzeichnet, dass**
eine Länge (W) der Öffnung (12A) in einer Richtung orthogonal zu einer Axialrichtung der Flüssigkeitsauftragswalze kleiner ist als ein Durchmesser der Flüssigkeitsauftragswalze (11).

2. Befeuchtungsvorrichtung nach Anspruch 1, wobei die Kammer (12) vertikal unter einem axialen Mittelpunkt der Flüssigkeitsauftragswalze (11) bereitgestellt ist.

3. Befeuchtungsvorrichtung nach Anspruch 1, wobei eine Außenoberfläche eines Öffnungselements (12C), das die Öffnung (12A) bildet und sich in der Axialrichtung erstreckt, von einer horizontalen Ebene in der Kammer (12) schräg nach unten geneigt ist.

4. Befeuchtungsvorrichtung nach einem der Ansprüche 1 bis 3, weiter umfassend:
eine Rakel (14), die zwischen dem Innenraum (12B) und einem Kontaktpunkt der Flüssigkeitsauftragswalze (11) und des Deckenpapiers bereitgestellt ist und angepasst ist, die Flüssigkeit, die an einer Oberfläche der Flüssigkeitsauftragswalze (11) haftet, abzuschaben; und
Steuermittel (19) zum Einstellen einer Menge der Flüssigkeit, die auf das Deckenpapier aufgetragen wird, durch Steuern eines Betriebs mindestens einer von der Flüssigkeitsauftragswalze (11) und der Rakel (14).

5. Befeuchtungsvorrichtung nach Anspruch 4, wobei eine Vielzahl der Rakeln (14) in der Axialrichtung nebeneinander liegen und ein Rakelbewegungsmechanismus (28, 29) für jede der Rakeln (14) bereitgestellt ist, um in einer Richtung zur Annäherung an die Oberfläche der Flüssigkeitsauftragswalze (11) oder Trennung von dieser angetrieben zu werden.

6. Befeuchtungsvorrichtung nach Anspruch 4 oder 5, wobei die Rakel (14) an einer stromabwärts liegenden Seite der Kammer (12) in einer Drehrichtung der Flüssigkeitsauftragswalze (11) bereitgestellt ist.

7. Befeuchtungsvorrichtung nach Anspruch 4 oder 5, wobei das Öffnungselement (12C), das die Öffnung (12A) der Kammer (12) bildet, die Rakel (14) darstellt.

8. Befeuchtungsvorrichtung nach einem der Ansprüche 1 bis 7, weiter umfassend:
einen Spalteinstellungsmechanismus (27), der einen Spalt zwischen der Öffnung (12A) der Kammer (12) und der Umfangsfläche der Flüssigkeitsauftragswalze (11) einstellt.

9. Befeuchtungsvorrichtung nach einem der Ansprüche 1 bis 8, weiter umfassend:
einen Motor, der die Flüssigkeitsauftragswalze (11) dreht,
wobei das Steuermittel (19) eine Drehzahl des Motors steuert.

10. Befeuchtungsvorrichtung nach einem der Ansprüche 1 bis 9, wobei ein Flüssigkeitsdurchlass (13), der die Flüssigkeit in die Kammer (12) zuleitet, bereitgestellt ist und Heizmittel (22) für die Flüssigkeit auf dem Flüssigkeitsdurchlass (13) eingefügt ist.

11. Befeuchtungsvorrichtung nach Anspruch 10, wobei das Heizmittel (22) in der Kammer (12) bereitgestellt ist.

12. Befeuchtungsvorrichtung nach Anspruch 10 oder 11, wobei der Flüssigkeitsdurchlass (13) mit einem Temperatursensor (23) bereitgestellt ist, der eine Temperatur der Flüssigkeit misst, und ein Ausgang des Heizmittels (22) basierend auf einem Detektionsergebnis des Temperatursensors (23) gesteuert wird.

13. Befeuchtungsvorrichtung nach einem der Ansprüche 1 bis 12, wobei eine Pfanne (18), die die Flüssigkeit aufnimmt, unter der Kammer (12) bereitgestellt ist.

14. Befeuchtungsvorrichtung nach Anspruch 13, wobei der Flüssigkeitsdurchlass (13) ein Zirkulationsdurchlass ist, der mit einem Zuleitungsdurchlass (13A), der die Flüssigkeit in die Kammer (12) zuleitet, und einem Rückführdurchlass (13B), der die Flüssigkeit, die in der Pfanne (18) gelagert ist, zum Zuleitungsdurchlass (13A) zurückleitet, bereitgestellt ist.

15. Befeuchtungsvorrichtung nach einem der Ansprüche 1 bis 14, wobei der Leim ein Stärkeleim ist und die Temperatur der Flüssigkeit mindestens 90 °C ist.

16. Wellpappenmaschine, in der die Befeuchtungsvorrichtung (100) nach einem der Ansprüche 1 bis 15 stromabwärts eines Vorheizers (1) bereitgestellt ist, der blattartiges Deckenpapier erhitzt, das in einer Richtung transportiert wird und an Zwischenlagenpapier (32) mittels eines Leims befestigt wird, der vor der Befestigung auf einen Scheitelpunkt einer Wellenform des Zwischenlagenpapiers (32), das in die Wellenform geformt ist, aufgetragen wird.

## Revendications

1. Dispositif d'humidification humidifiant du papier doublure (34) transporté dans une direction et fixé au papier support (32) via une colle appliquée à un sommet d'une forme de vague du papier support (32) formé dans la forme de vague, le dispositif étant adapté pour être prévu en aval d'un préchauffage (1) d'une machine de production de carton ondulé et comprenant :
un rouleau d'application de liquide (11) chauffant le papier doublure avant la fixation et l'application d'un liquide chauffé au papier doublure (34) ; et
une chambre (12) disposée pour faire face à une face périphérique du rouleau d'application de liquide (11) et dotée d'un espace interne (12B) auquel le liquide est fourni,
dans lequel la chambre (12) présente une ouverture (12A) communiquant avec l'espace interne (12B) au niveau d'une partie supérieure verticalement de celle-ci, l'ouverture (12A) étant destinée à fournir le liquide à la face périphérique du rouleau d'application de liquide (11), dans lequel une portion dans une direction descendante verticalement du rouleau d'application de liquide entre dans la chambre depuis l'ouverture pour entrer en contact avec le liquide dans la chambre,
**caractérisé en ce que**
une longueur (W) de l'ouverture (12A) dans une direction orthogonale à une direction axiale du rouleau d'application de liquide est inférieure à un diamètre du rouleau d'application de liquide (11).

2. Dispositif d'humidification selon la revendication 1, dans lequel la chambre (12) est prévue verticalement sous un centre axial du rouleau d'application de liquide (11).

3. Dispositif d'humidification selon la revendication 1, dans lequel une surface extérieure d'un élément d'ouverture (12C) formant l'ouverture (12A) et s'étendant dans la direction axiale est inclinée en oblique vers le bas depuis un plan horizontal dans la chambre (12).

4. Dispositif d'humidification selon l'une quelconque des revendications 1 à 3, comprenant en outre :
une lame (14) prévue entre l'espace interne (12B) et un point de contact du rouleau d'application de liquide (11) et du papier doublure et étant adaptée pour racler le liquide attaché à une surface du rouleau d'application de liquide (11) ; et
un moyen de commande (19) pour l'ajustement d'une quantité du liquide appliquée au papier doublure par commande d'une opération d'au moins un du rouleau d'application de liquide (11) et de la lame (14).

5. Dispositif d'humidification selon la revendication 4, dans lequel une pluralité de lames (14) est juxtaposée dans la direction axiale et un mécanisme de déplacement de lame (28, 29) est prévu pour chacune des lames (14) à entraîner dans une direction d'approche ou de séparation de la surface du rouleau d'application de liquide (11).

6. Dispositif d'humidification selon la revendication 4 ou 5, dans lequel la lame (14) est prévue sur un côté en aval de la chambre (12) dans une direction de rotation du rouleau d'application de liquide (11).

7. Dispositif d'humidification selon la revendication 4 ou 5, dans lequel l'élément d'ouverture (12C) formant l'ouverture (12A) de la chambre (12) constitue la lame (14).

8. Dispositif d'humidification selon l'une quelconque des revendications 1 à 7, comprenant en outre :
un mécanisme d'ajustement de fente (27) ajustant une fente entre l'ouverture (12A) de la chambre (12) et la face périphérique du rouleau d'application de liquide (11).

9. Dispositif d'humidification selon l'une quelconque des revendications 1 à 8, comprenant en outre :
un moteur tournant le rouleau d'application de liquide (11),
dans lequel le moyen de commande (19) commande une vitesse de rotation du moteur.

10. Dispositif d'humidification selon l'une quelconque des revendications 1 à 9, dans lequel un passage de liquide (13) fournissant le liquide dans la chambre (12) est prévu et un moyen de chauffage (22) pour le liquide est interposé sur le passage de liquide (13).

11. Dispositif d'humidification selon la revendication 10, dans lequel le moyen de chauffage (22) est prévu dans la chambre (12).

12. Dispositif d'humidification selon la revendication 10 ou 11, dans lequel le passage de liquide (13) est doté d'un capteur de température (23) mesurant une température du liquide et une sortie du moyen de chauffage (22) est commandée sur la base d'un résultat de détection du capteur de température (23).

13. Dispositif d'humidification selon l'une quelconque des revendications 1 à 12, dans lequel un bac (18) recevant le liquide est prévu sous la chambre (12).

14. Dispositif d'humidification selon la revendication 13, dans lequel le passage de liquide (13) est un passage de circulation doté d'un passage d'alimentation (13A) fournissant le liquide dans la chambre (12) et un passage de recyclage (13B) faisant retourner le liquide stocké dans le bac (18) au passage d'alimentation (13A).

15. Dispositif d'humidification selon l'une quelconque des revendications 1 à 14, dans lequel la colle est une colle à l'amidon et la température du liquide est au moins de 90 °C.

16. Machine de production de carton ondulé, dans laquelle le dispositif d'humidification (100) selon l'une quelconque des revendications 1 à 15 est prévu en aval d'un préchauffage (1) chauffant du papier doublure de type feuille transporté dans une direction et fixé au papier support (32) via une colle appliquée à un sommet d'une forme de vague du papier support (32) formé à l'intérieur de la forme de vague avant la fixation.
